# EUROPÄISCHE PATENTSCHRIFT

(11) **EP 4 137 341 B1**
(45) Veröffentlichungstag und Bekanntmachung des Hinweises auf die Patenterteilung: **11.09.2024**
(21) Anmeldenummer: 22185635.4
(22) Anmeldetag: 19.07.2022
(51) Int. Cl.: B60J 5/04

(54) **FAHRZEUG**
WHEELED VEHICLE
VÉHICULE

(30) Priorität: 19.08.2021 DE 102021121532
(43) Veröffentlichungstag der Anmeldung: 22.02.2023
(73) Patentinhaber: Audi AG, 85045 Ingolstadt (DE)
(72) Erfinder: LIEPOLD, Thomas, 85080 Gaimersheim (DE); MAUERSBERGER, Frank, 85049 Ingolstadt (DE)

(56) Entgegenhaltungen:
- EP-A1- 3 587 155
- US-A1- 2009 051 194
- US-A1- 2020 398 650
- US-B1- 6 382 705

## Beschreibung

Die Erfindung betrifft ein Fahrzeug mit einer Karosserie und mindestens zwei in Fahrzeuglängsrichtung hintereinander angeordneten Fahrzeugtüren ohne trennende Fahrzeugsäule, welche jeweils zwischen einer Geschlossenstellung und einer Offenstellung bewegt werden können.

Fahrzeuge mit mindestens zwei in Fahrzeuglängsrichtung hintereinander angeordneten Fahrzeugtüren ohne trennende Fahrzeugsäule sind in zahlreichen Variationen bekannt.

Aus der DE 10 2017 008 872 A1 ist ein Kraftfahrzeug mit einer Türvorrichtung bekannt, welche eine Fahrzeugtür, eine Führungskulisse, welche einen Führungsweg, entlang welchem die Fahrzeugtür geführt bewegbar ist, zumindest bereichsweise begrenzt, und welche an einer Karosserie des Kraftfahrzeugs angeordnet ist, ein erstes Führungselement, welches einerseits bewegbar mit der Führungskulisse und andererseits mit einem ersten Türbereich der Fahrzeugtür gekoppelt ist, und ein zweites Führungselement umfasst, welches einerseits drehbar mit der Karosserie des Kraftfahrzeugs und andererseits drehbar mit einem zweiten Türbereich der Fahrzeugtür gekoppelt ist. Das erste Führungselement weist zwei in Fahrzeugquerrichtung des Kraftfahrzeugs in einem Abstand zueinander angeordnete Elementbereiche auf, von welchen ein erster Elementbereich drehfest mit der Fahrzeugtür verbunden und ein zweiter Elementbereich bewegbar mit der Führungskulisse gekoppelt ist. Das Kraftfahrzeug kann beispielsweise als viertüriges Cabriolet ohne B-Säulen ausgebildet sein.

Aus der DE 10 2018 108 378 A1 ist ein Fahrzeug mit einer mittig öffnenden Türbaugruppe, die an eine Fahrgastzelle montiert ist, und einem aktiven Verriegelungsmechanismus für die mittig öffnende Türbaugruppe bekannt. Die mittig öffnende Türbaugruppe beinhaltet ein an einem Hinterscharnier montiertes Hintertürblech und ein an einem Vorderscharnier montiertes Vordertürblech. Bei dieser Art mittig öffnender Türbaugruppe fehlt üblicherweise eine Festscharniersäule, durch die das an einem Hinterscharnier montierte Hintertürblech in einer geschlossenen Konfiguration abgestützt werden könnten. Stattdessen wird dem an einem Hinterscharnier montierten Hintertürblech ein oberer und ein unterer Verriegelungsmechanismus bereitgestellt, der jeweils in kooperierende Schließer einrastet, die an einem Fahrzeugdachrahmen und einem Schweller angeordnet sind. Das an einem Vorderscharnier montierte Vordertürblech rastet in einen in der Mitte montierten Schließer ein, der an dem an einem Hinterscharnier montierten Hintertürblech angeordnet ist. Der obere Verriegelungsmechanismus wird von einer Verstärkungsplatte abgestützt und ist gelenkig gelagert, um unter der aktiven Kontrolle eines Aktuators, wie zum Beispiel einem Kabel, in einen Schließer einzugreifen. Um senkrechte Bewegungen des an dem Hinterscharnier montierten Hintertürblechs relativ zu dem an dem Vorderscharnier montierten Vordertürblech in einer geschlossenen Konfiguration während einer Fahrt des Fahrzeugs zu vermeiden, wird ein ergänzender Verriegelungsmechanismus für die mittig öffnende Türbaugruppe eingesetzt. Der ergänzende Verriegelungsmechanismus beinhaltet einen Stift, der mit dem an dem Vorderscharnier montierten Vordertürblech assoziiert ist. Der ergänzende Verriegelungsmechanismus beinhaltet ferner eine Aufnahme, die mit dem an dem Hinterscharnier montierten Hintertürblech assoziiert ist. Hierbei treten der Stift und die zusammenwirkende Aufnahme in Eingriff, um eine Bewegung des an einem Vorderscharnier montierten Vordertürblechs senkrecht zu dem an einem Hinterscharnier montierten Hintertürblech zu reduzieren oder zu verhindern.

Aus der US 2020/0398650 A1 ist ein gattungsgemäßes Fahrzeug mit einer Karosserie und mindestens zwei in Fahrzeuglängsrichtung hintereinander angeordneten Fahrzeugtüren, welche jeweils zwischen einer Geschlossenstellung und einer Offenstellung bewegbar und schiebeschwenkbeweglich mit der Karosserie gekoppelt sind, und mindestens einer passiven Verriegelungsvorrichtung bekannt. Zumindest eine der Fahrzeugtüren ist ausgebildet, in der Geschlossenstellung eine Fahrzeugsäule der Karosserie auszubilden. Die mindestens eine passive Verriegelungsvorrichtung ist ausgeführt, die integrierte Fahrzeugsäule der korrespondierenden Fahrzeugtür in der Geschlossenstellung formschlüssig mit der Karosserie zu verbinden. Die mindestens eine passive Verriegelungsvorrichtung umfasst ein karosserieseitiges Aufnahmeelement, welches eine Aufnahmeöffnung und eine Verriegelungsöffnung umfasst, und ein türseitiges Verriegelungselement, welches als pilzförmiger Verriegelungsbolzen ausgeführt ist.

Der Erfindung liegt die Aufgabe zu Grunde, ein Fahrzeug mit einer Karosserie und mindestens zwei in Fahrzeuglängsrichtung hintereinander angeordneten Fahrzeugtüren bereitzustellen, welche im geschlossenen Zustand Steifigkeit und Lastverteilung der Fahrzeugkarosserie verbessern.

Diese Aufgabe wird durch ein Fahrzeug mit den Merkmalen des Patentanspruchs 1 gelöst. Vorteilhafte Ausgestaltungen mit zweckmäßigen Weiterbildungen der Erfindung sind in den abhängigen Patentansprüchen angegeben.

Um ein Fahrzeug mit einer Karosserie und mindestens zwei in Fahrzeuglängsrichtung hintereinander angeordneten Fahrzeugtüren bereitzustellen, welche im geschlossenen Zustand Steifigkeit und Lastverteilung der Fahrzeugkarosserie verbessern, ist zumindest eine der Fahrzeugtüren ausgebildet, in einer Geschlossenstellung eine Fahrzeugsäule der Karosserie auszubilden. Hierbei ist mindestens eine passive Verriegelungsvorrichtung ausgeführt, die integrierte Fahrzeugsäule im geschlossenen Zustand der korrespondierenden Fahrzeugtür formschlüssig mit der Karosserie zu verbinden. Zudem sind die mindestens zwei in Fahrzeuglängsrichtung hintereinander angeordneten Fahrzeugtüren schiebeschwenkbeweglich mit der Karosserie gekoppelt, um jeweils zwischen der Geschlossenstellung und einer Offenstellung bewegt werden zu können.

Die mindestens eine passive Verriegelungsvorrichtung umfasst ein karosserieseitiges Aufnahmeelement und ein türseitiges Verriegelungselement. Hierbei kann das türseitige Verriegelungselement ausgeführt sein, durch eine Schwenkbewegung der korrespondierenden Fahrzeugtür in das karosserieseitige Aufnahmeelement eingeführt und durch eine verriegelnde Schiebebewegung der korrespondierenden Fahrzeugtür in dem karosserieseitigen Aufnahmeelement formschlüssig verriegelt zu werden. Dies ermöglicht eine besonders einfache und kostengünstige Realisierung der automatischen formschlüssigen Verriegelung der integrierten Fahrzeugsäule mit der Karosserie durch die Schließbewegung der korrespondierenden Fahrzeugtür.

Das karosserieseitige Aufnahmeelement umfasst eine Aufnahmeöffnung und einer Verriegelungsöffnung. Das karosserieseitige Aufnahmeelement kann beispielsweise als Schlüssellochbohrung oder als Kulissenführung ausgeführt sein. Das türseitige Verriegelungselement ist als Verriegelungsbolzen ausgeführt. Der Verriegelungsbolzen kann beispielsweise zylindrisch oder pilzförmig oder schwalbenschwanzförmig ausgeführt sein. Hierbei sind die Aufnahmeöffnung und die Verriegelungsöffnung des karosserieseitigen Aufnahmeelements so an die Form des Verriegelungsbolzens angepasst, dass der Verriegelungsbolzen in der Geschlossenstellung bajonettartig mit dem karosserieseitigen Aufnahmeelement verrastbar ist.

In vorteilhafter Ausgestaltung des Fahrzeugs kann die mindestens eine passive Verriegelungsvorrichtung ausgeführt sein, die integrierte Fahrzeugsäule in der Geschlossenstellung formschlüssig mit einem Strukturbauteil der Karosserie zu verbinden. Hierbei kann beispielsweise eine erste passive Verriegelungsvorrichtung ausgeführt sein, die integrierte Fahrzeugsäule in der Geschlossenstellung mit einem als Dachrahmen ausgeführten ersten Strukturbauteil formschlüssig zu verbinden. Eine zweite passive Verriegelungsvorrichtung kann beispielsweise ausgeführt sein, die integrierte Fahrzeugsäule in der Geschlossenstellung mit einem als Schweller ausgeführten zweiten Strukturbauteil formschlüssig zu verbinden. Durch die in die Fahrzeugtür integrierte Fahrzeugsäule kann im Fahrbetrieb bei der Geschlossenstellung der Fahrzeugtüren die Steifigkeit der Karosserie im Bereich des Türausschnitts erhöht und analog zu einer vorhandenen B-Säule ein entsprechender Lastpfad zwischen dem Dachrahmen und dem Schweller bereitgestellt werden. In der Offenstellung der Fahrzeugtüren kann jedoch das verfügbare Raumangebot zum Einsteigen bzw. Aussteigen deutlich vergrößert werden, da keine B-Säule das Einsteigen bzw. Aussteigen behindert.

In weiterer vorteilhafter Ausgestaltung des Fahrzeugs kann mindestens ein erstes Verstärkungselement an einem vertikalen Rahmenabschnitt einer ersten Fahrzeugtür und/oder mindestens ein zweites Verstärkungselement an einem vertikalen Rahmenabschnitt einer zweiten Fahrzeugtür die integrierte Fahrzeugsäule ausbilden. Die erste Fahrzeugtür kann in Fahrtrichtung hinter der zweiten Fahrzeugtür angeordnet sein. Hierbei kann eine erste Schiebeschwenkkinematik die erste Fahrzeugtür schiebeschwenkbeweglich an einer C-Säule der Karosserie lagern, und eine zweite Schiebeschwenkkinematik kann die zweite Fahrzeugtür schiebeschwenkbeweglich an einer A-Säule der Karosserie lagern. So kann beispielsweise ein der zweiten Fahrzeugtür zugewandter vorderer vertikaler Rahmenabschnitt der ersten Fahrzeugtür durch das mindestens eine erste Verstärkungselement verstärkt sein und die in die erste Fahrzeugtür integrierte Fahrzeugsäule ausbilden. Alternativ kann beispielsweise ein der ersten Fahrzeugtür zugewandter hinterer vertikaler Rahmenabschnitt der zweiten Fahrzeugtür durch das mindestens eine zweite Verstärkungselement verstärkt sein und die in die zweite Fahrzeugtür integrierte Fahrzeugsäule ausbilden. Bei einer bevorzugten Ausführungsform können mindestens ein erstes Verstärkungselement an dem vorderen vertikalen Rahmenabschnitt der ersten Fahrzeugtür und mindestens ein zweites Verstärkungselement an dem hinteren vertikalen Rahmenabschnitt der zweiten Fahrzeugtür gemeinsam die integrierte Fahrzeugsäule ausbilden. Dadurch kann das Zusatzgewicht der Verstärkungselemente auf die Fahrzeugtüren verteilt werden.

Ausführungsbeispiele der Erfindung sind in den Zeichnungen dargestellt und werden in der nachfolgenden Beschreibung näher erläutert. In den Zeichnungen bezeichnen gleiche Bezugszeichen Komponenten bzw. Elemente, die gleiche bzw. analoge Funktionen ausführen. Hierbei zeigen:
- Fig. 1: eine schematische und ausschnittsweise Darstellung eines Ausführungsbeispiel eines erfindungsgemäßen Fahrzeugs;
- Fig. 2: eine schematische und perspektivische Darstellung eines Details II aus Fig. 1, welches ein erstes Ausführungsbeispiel einer passiven Verriegelungsvorrichtung für das erfindungsgemäße Fahrzeug aus Fig. 1 zeigt; und
- Fig. 3: eine schematische Schnittdarstellung eines zweiten Ausführungsbeispiels der passiven Verriegelungsvorrichtung für das erfindungsgemäße Fahrzeug aus Fig. 1.

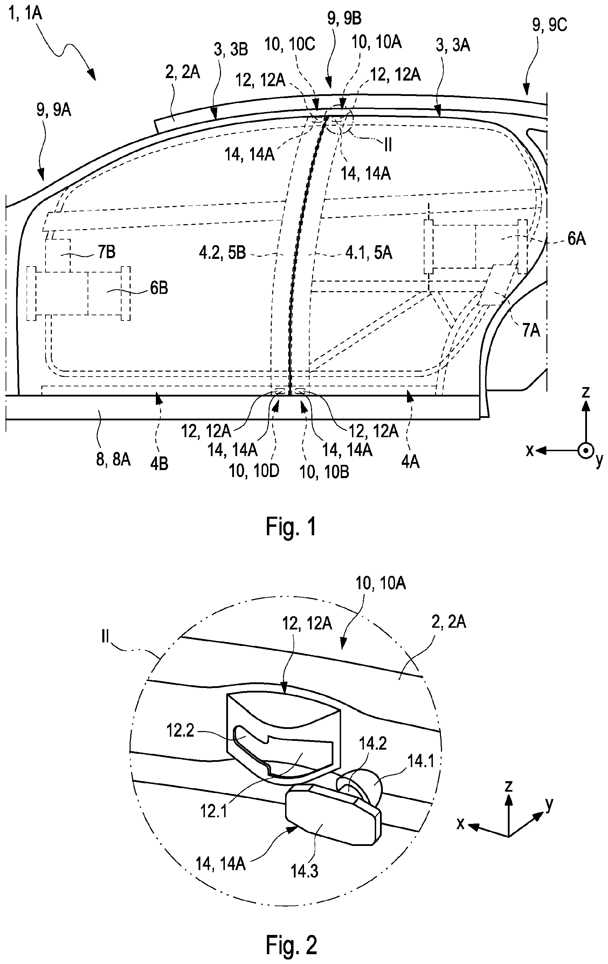

Wie aus Fig. 1 bis 3 ersichtlich ist, umfasst das dargestellte Ausführungsbeispiel eines erfindungsgemäßen Fahrzeugs 1 eine Karosserie 1A und mindestens zwei in Fahrzeuglängsrichtung x hintereinander angeordnete Fahrzeugtüren 3, 3A, 3B, welche jeweils zwischen einer Geschlossenstellung und einer Offenstellung bewegbar und schiebeschwenkbeweglich mit der Karosserie 1A gekoppelt sind, und mindestens eine passive Verriegelungsvorrichtung 10, 10A, 10B, 10C, 10D. Hierbei bildet zumindest eine der Fahrzeugtüren 3, 3A, 3B in der Geschlossenstellung eine Fahrzeugsäule 9 der Karosserie 1A aus, wobei die mindestens eine passive Verriegelungsvorrichtung 10, 10A, 10B, 10C, 10D die integrierte Fahrzeugsäule 9 der korrespondierenden Fahrzeugtür 3, 3A, 3B in der Geschlossenstellung formschlüssig mit der Karosserie 1A verbindet.

Wie aus Fig. 1 weiter ersichtlich ist, ist eine Fahrzeugtür 3A in Fahrtrichtung hinter einer zweiten Fahrzeugtür 3B angeordnet. Hierbei umfasst die erste Fahrzeugtür 3A einen umlaufenden Türrahmen 4A mit einem vorderen vertikalen Rahmenabschnitt 4.1, welcher durch ein bandförmiges erstes Verstärkungselement 5A verstärkt ist. Zudem lagert eine erste Schiebeschwenkkinematik 6A die erste Fahrzeugtür 3A schiebeschwenkbeweglich an einer C-Säule 9C der Karosserie 1A des Fahrzeugs 1. Die zweite Fahrzeugtür 3B ist in Fahrtrichtung vor der ersten Fahrzeugtür 3A angeordnet und umfasst einen umlaufenden Türrahmen 4B mit einem hinteren vertikalen Rahmenabschnitt 4.2, welcher durch ein bandförmiges zweites Verstärkungselement 5B verstärkt ist. Des Weiteren lagert eine zweite Schiebeschwenkkinematik 6B die zweite Fahrzeugtür 3B schiebeschwenkbeweglich an einer A-Säule 9A der Karosserie 1A des Fahrzeugs 1. Wie aus Fig. 1 weiter ersichtlich ist, umfassen die beiden Fahrzeugtüren 3A, 3B jeweils ein elektrisches Türschloss 7A, 7B. So sichert ein erstes elektrisches Türschloss 7A die erste Fahrzeugtür 3A gegen unautorisiertes Öffnen. Ein zweites elektrisches Türschloss 7B sichert die zweite Fahrzeugtür 3B gegen unautorisiertes Öffnen.

Wie aus Fig. 1 weiter ersichtlich ist, bilden im dargestellten Ausführungsbeispiel des Fahrzeugs 1 das erste Verstärkungselement 5A der ersten Fahrzeugtür 3A und das zweite Verstärkungselement 5B der zweiten Fahrzeugtür 3B gemeinsam die integrierte Fahrzeugsäule 9 aus, welche hier einer B-Säule 9B entspricht.

Wie aus Fig. 1 weiter ersichtlich ist, verbindet eine erste passive Verriegelungsvorrichtung 10A einen in die erste Fahrzeugtür 3A integrierten Teil der integrierten Fahrzeugsäule 9 bzw. das erste Verstärkungselement 5A in der Geschlossenstellung formschlüssig mit einem als Dachrahmen 2A ausgeführten ersten Strukturbauteil 2. Eine zweite passive Verriegelungsvorrichtung 10B verbindet den in die erste Fahrzeugtür 3A integrierten Teil der integrierten Fahrzeugsäule 9 bzw. das erste Verstärkungselement 5A in der Geschlossenstellung formschlüssig mit einem als Schweller 8A ausgeführten zweiten Strukturbauteil 8. Zudem verbindet eine dritte passive Verriegelungsvorrichtung 10C einen in die zweite Fahrzeugtür 3B integrierten Teil der integrierten Fahrzeugsäule 9 bzw. das zweite Verstärkungselement 5B in der Geschlossenstellung formschlüssig mit dem als Dachrahmen 2A ausgeführten ersten Strukturbauteil 2. Eine vierte passive Verriegelungsvorrichtung 10D verbindet den in die zweite Fahrzeugtür 3B integrierten Teil der integrierten Fahrzeugsäule 9 bzw. das zweite Verstärkungselement 5B in der Geschlossenstellung formschlüssig mit dem als Schweller 8A ausgeführten zweiten Strukturbauteil 8.

Bei einem alternativen nicht dargestellten Ausführungsbeispiel des Fahrzeugs 1 bildet nur das erste Verstärkungselement 5A der ersten Fahrzeugtür 3A die integrierte Fahrzeugsäule 9 aus. Bei diesem alternativen Ausführungsbeispiel ist nur das erste Verstärkungselement 5A der ersten Fahrzeugtür 3A in der Geschlossenstellung über die erste passive Verriegelungsvorrichtung 10A formschlüssig mit dem Dachrahmen 2A und über die zweite passive Verriegelungsvorrichtung 10B formschlüssig mit dem Schweller 8A verbunden.

Bei einem weiteren alternativen nicht dargestellten Ausführungsbeispiel des Fahrzeugs 1 bildet nur das zweite Verstärkungselement 5B der zweiten Fahrzeugtür 3B die integrierte Fahrzeugsäule 9 aus. Bei diesem alternativen Ausführungsbeispiel ist nur das zweite Verstärkungselement 5B der zweiten Fahrzeugtür 3B in der Geschlossenstellung über die dritte passive Verriegelungsvorrichtung 10C formschlüssig mit dem Dachrahmen 2A und über die vierte passive Verriegelungsvorrichtung 10D formschlüssig mit dem Schweller 8A verbunden.

Wie aus Fig. 1 bis 3 weiter ersichtlich ist, umfassen die passiven Verriegelungsvorrichtungen 10, 10A, 10B, 10C, 10D jeweils ein karosserieseitiges Aufnahmeelement 12 und ein türseitiges Verriegelungselement 14. Hierbei wird das türseitige Verriegelungselement 14 durch eine Schwenkbewegung der korrespondierenden Fahrzeugtür 3 in das karosserieseitige Aufnahmeelement 12 eingeführt und durch eine verriegelnde Schiebebewegung der korrespondierenden Fahrzeugtür 3 in dem karosserieseitigen Aufnahmeelement 12 formschlüssig verriegelt. Hierzu umfasst das karosserieseitige Aufnahmeelement 12 eine Aufnahmeöffnung 12.1 und eine Verriegelungsöffnung 12.2.

Wie aus Fig. 2 weiter ersichtlich ist, ist das karosserieseitige Aufnahmeelement 12 im dargestellten Ausführungsbeispiel der ersten passiven Verriegelungsvorrichtung 10A als Schlüssellochbohrung 12A mit einer größeren Aufnahmeöffnung 12.1 und einer kleineren Verriegelungsöffnung 12.2 ausgeführt und am Dachrahmen 2A angeordnet. Das türseitige Verriegelungselement 14 ist als pilzförmiger Verriegelungsbolzen 14A mit einem breiteren Bolzenkopf 14.1 und einem schmäleren Bolzenstamm 14.2 ausgeführt, welcher auf einer Grundplatte 14.3 angeordnet ist. Hierbei wird der pilzförmige Verriegelungsbolzen 14A im dargestellten Ausführungsbeispiel durch eine kombinierte in Fahrzeuglängsrichtung x und Fahrzeugquerrichtung y verlaufende Schwenkbewegung in die Aufnahmeöffnung 12.1 eingeführt und durch die anschließende Schiebebewegung in Fahrzeuglängsrichtung x in der Verriegelungsöffnung 12.2 verriegelt. Im Unterschied zur ersten passiven Verriegelungsvorrichtung 10A ist das karosserieseitige Aufnahmeelement 12 der zweiten passiven Verriegelungsvorrichtung 10B am Schweller 8A angeordnet. Die dritte passive Verriegelungsvorrichtung 10C gespiegelt zur ersten passive Verriegelungsvorrichtung 10A ausgeführt, und die vierte passive Verriegelungsvorrichtung 10D ist gespiegelt zur zweiten passiven Verriegelungsvorrichtung 10B ausgeführt.

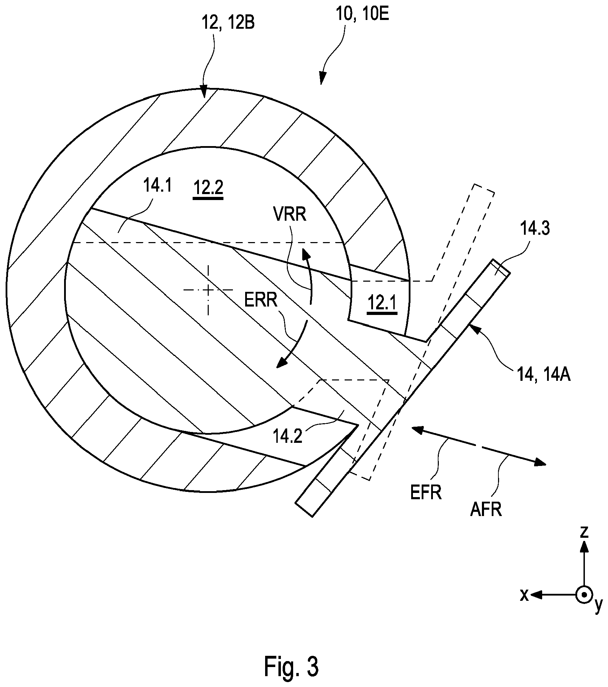

Wie aus Fig. 3 weiter ersichtlich ist, ist das karosserieseitige Aufnahmeelement 12 im dargestellten fünften Ausführungsbeispiel der passiven Verriegelungsvorrichtung 10E als Kulissenführung 12B mit einer Aufnahmeöffnung 12.1 und einer Verriegelungsöffnung 12.2 ausgeführt. Das türseitige Verriegelungselement 14 ist als pilzförmiger Verriegelungsbolzen 14A mit einem breiteren Bolzenkopf 14.1 und einem schmäleren Bolzenstamm 14.2 ausgeführt, welcher auf einer Grundplatte 14.3 angeordnet ist.

Im dargestellten Ausführungsbeispiel wird der pilzförmige Verriegelungsbolzen 14A durch eine kombinierte in Fahrzeuglängsrichtung x und Fahrzeugquerrichtung y verlaufende Schwenkbewegung in einer vorgegebenen Einführrichtung EFR in die Aufnahmeöffnung 12.1 eingeführt und durch eine anschließende Schiebebewegung in Fahrzeugquerrichtung y entsprechend einer Verriegelungsrichtung VRR in der Verriegelungsöffnung 12.2 um eine Drehachse verdreht und dadurch verriegelt, wie die gestrichelte Darstellung des Verriegelungsbolzens 14A zeigt. Da die Aufnahmeöffnung 12.1 und die Verriegelungsöffnung 12.2 des karosserieseitigen Aufnahmeelements 12 an die Form des Verriegelungsbolzens 14A angepasst sind, verrastet der Verriegelungsbolzen 14A in der Geschlossenstellung bajonettartig mit dem karosserieseitigen Aufnahmeelement 12. Beim Öffnen der korrespondierenden Fahrzeugtür 3 wird der Verriegelungsbolzen 14A in der Verriegelungsöffnung zunächst in eine entgegengesetzte Entriegelungsrichtung ERR verdreht und dann in eine entgegengesetzte Ausführrichtung AFR aus der Aufnahmeöffnung 12.1 ausgeführt.

Alternativ kann der Verriegelungsbolzen 14A zylindrisch oder schwalbenschwanzförmig ausgeführt sein.

### BEZUGSZEICHENLISTE

- 1: Fahrzeug
- 1A: Karosserie
- 2: erstes Strukturbauteil
- 2A: Dachrahmen
- 3, 3A, 3B: Fahrzeugtür
- 4A, 4B: Türrahmen
- 4.1, 4.2: Rahmenabschnitt
- 5A, 5B: Verstärkungselement
- 6A, 6B: Schiebeschwenkkinematik
- 7A, 7B: elektrisches Türschloss
- 8: zweites Strukturbauteil
- 8A: Schweller
- 9: Fahrzeugsäule
- 9A: A-Säule
- 9B: B-Säule
- 9C: C-Säule
- 10, 10A, 10B: Verriegelungsvorrichtung
- 12: Aufnahmeelement
- 12A: Schlüssellochbohrung
- 12B: Kulissenführung
- 12.1: Aufnahmeöffnung
- 12.2: Verriegelungsöffnung
- 14: Verriegelungselement
- 14A: pilzförmiger Verriegelungsbolzen
- 14.1: Bolzenkopf
- 14.2: Bolzenstamm
- 14.3: Grundplatte
- EFR: Einführrichtung
- AFR: Ausführrichtung
- VRR: Verriegelungsrichtung
- ERR: Entriegelungsrichtung

## Patentansprüche

1. Fahrzeug (1) mit einer Karosserie (1A) und mindestens zwei in Fahrzeuglängsrichtung (x) hintereinander angeordneten Fahrzeugtüren (3), welche jeweils zwischen einer Geschlossenstellung und einer Offenstellung bewegbar und schiebeschwenkbeweglich mit der Karosserie (1A) gekoppelt sind, und mindestens einer passiven Verriegelungsvorrichtung (10), wobei zumindest eine der Fahrzeugtüren (3) ausgebildet ist, in der Geschlossenstellung eine Fahrzeugsäule (9) der Karosserie (1A) auszubilden, wobei die mindestens eine passive Verriegelungsvorrichtung (10) ausgeführt ist, die integrierte Fahrzeugsäule (9) der korrespondierenden Fahrzeugtür (3) in der Geschlossenstellung formschlüssig mit der Karosserie (1A) zu verbinden, wobei die mindestens eine passive Verriegelungsvorrichtung (10) ein karosserieseitiges Aufnahmeelement (12), welches eine Aufnahmeöffnung (12.1) und eine Verriegelungsöffnung (12.2) umfasst, und ein türseitiges Verriegelungselement (14) umfasst, welches als zylindrischer oder pilzförmiger oder schwalbenschwanzförmiger Verriegelungsbolzen (14A) ausgeführt ist,
**dadurch gekennzeichnet,**
**dass** die Aufnahmeöffnung (12.1) und die Verriegelungsöffnung (12.2) des karosserieseitigen Aufnahmeelements (12) an die Form des Verriegelungsbolzens (14A) so angepasst sind, dass der Verriegelungsbolzen (14A) in der Geschlossenstellung bajonettartig mit dem karosserieseitigen Aufnahmeelement (12) verrastet ist.

2. Fahrzeug (1) nach Anspruch 1,
**dadurch gekennzeichnet,**
**dass** die mindestens eine passive Verriegelungsvorrichtung (10) ausgeführt ist, die integrierte Fahrzeugsäule (9) in der Geschlossenstellung formschlüssig mit einem Strukturbauteil (2, 8) der Karosserie (1A) zu verbinden.

3. Fahrzeug (1) nach Anspruch 2,
**dadurch gekennzeichnet,**
**dass** eine erste passive Verriegelungsvorrichtung (10) ausgeführt ist, die integrierte Fahrzeugsäule (9) in der Geschlossenstellung mit einem als Dachrahmen (2A) ausgeführten ersten Strukturbauteil (2) formschlüssig zu verbinden, und eine zweite passive Verriegelungsvorrichtung (10) ausgeführt ist, die integrierte Fahrzeugsäule (9) in der Geschlossenstellung mit einem als Schweller (8A) ausgeführten zweiten Strukturbauteil (2) formschlüssig zu verbinden.

4. Fahrzeug (1) nach einem der Ansprüche 1 bis 3,
**dadurch gekennzeichnet,**
**dass** mindestens ein erstes Verstärkungselement (5A) an einem vertika-Ien Rahmenabschnitt (4.1) einer ersten Fahrzeugtür (3A) und/oder mindestens ein zweites Verstärkungselement (5B) an einem vertikalen Rahmenabschnitt (4.2) einer zweiten Fahrzeugtür (3B) die integrierte Fahrzeugsäule (9) ausbilden.

5. Fahrzeug (1) nach Anspruch 4,
**dadurch gekennzeichnet,**
**dass** die erste Fahrzeugtür (3A) in Fahrtrichtung hinter der zweiten Fahrzeugtür (3B) angeordnet ist, wobei eine erste Schiebeschwenkkinematik (6A) die erste Fahrzeugtür (3A) schiebeschwenkbeweglich an einer C-Säule (9C) der Karosserie (1A) lagert und eine zweite Schiebeschwenckinematik (6B) die zweite Fahrzeugtür (3B) schiebeschwenkbeweglich an einer A-Säule (9A) der Karosserie (1A) lagert.

6. Fahrzeug (1) nach einem der Ansprüche 1 bis 5,
**dadurch gekennzeichnet,**
**dass** das türseitige Verriegelungselement (14) ausgeführt ist, durch eine Schwenkbewegung der korrespondierenden Fahrzeugtür (3) in das karosserieseitige Aufnahmeelement (12) eingeführt und durch eine verriegelnde Schiebebewegung der korrespondierenden Fahrzeugtür (3) in dem karosserieseitigen Aufnahmeelement (12) formschlüssig verriegelt zu werden.

7. Fahrzeug (1) nach einem der Ansprüche 1 bis 6,
**dadurch gekennzeichnet,**
**dass** das karosserieseitige Aufnahmeelement (12) als Schlüssellochbohrung (12A) oder als Kulissenführung (12B) ausgeführt ist.

## Claims

1. Vehicle (1) having a body (1A) and at least two vehicle doors (3) arranged in vehicle longitudinal direction (x) behind one another, which are movable respectively between a closed position and an open position and are coupled in a sliding-pivotal manner to the body (1A), and at least one passive locking device (10), wherein at least one of the vehicle doors (3) is configured, in the closed position, to form a vehicle pillar (9) of the body (1A), wherein the at least one passive locking device (10) is designed to connect the integrated vehicle pillar (9) of the corresponding vehicle door (3) in the closed position in a form-fitting manner to the body (1A), wherein the at least one passive locking device (10) comprises a receiving element (12) on the body side, which comprises a receiving opening (12.1) and a locking opening (12.2), and a locking element (14) on the door side, which is designed as a cylindrical or mushroom-shaped or swallowtail-shaped locking bolt (14A),
**characterized in that**
the receiving opening (12.1) and the locking opening (12.2) of the receiving element (12) on the body side are adapted to the shape of the locking bolt (14A) such that the locking bolt (14A), in the closed position, is latched in the manner of a bayonet to the receiving element (12) on the body side.

2. Motor vehicle (1) according to claim 1,
**characterized in that**
the at least one passive locking device (10) is designed to connect the integrated vehicle pillar (9) in the closed position in a form-fitting manner to a structural component (2, 8) of the body (1A).

3. Motor vehicle (1) according to claim 2,
**characterized in that**
a first passive locking device (10) is designed to connect the integrated vehicle pillar (9) in the closed position in a form-fitting manner to a first structural component (2) designed as a roof frame (2A), and a second passive locking device (10) is designed to connect the integrated vehicle pillar (9) in the closed position in a form-fitting manner to a second structural component (2) designed as a sill (8A).

4. Motor vehicle (1) according to any of claims 1 to 3,
**characterized in that**
at least one first reinforcing element (5A) forms the integrated vehicle pillar (9) at a vertical frame portion (4.1) of a first vehicle door (3A) and/or at least one second reinforcing element (5B) forms the integrated vehicle pillar (9) at a vertical frame portion (4.2) of a second vehicle door (3B).

5. Motor vehicle (1) according to claim 4,
**characterized in that**
the first vehicle door (3A) is arranged in drive direction behind the second vehicle door (3B), wherein a first sliding-pivotal kinematics (6A) mounts the first vehicle door (3A) in a sliding-pivotal manner at a C-pillar (9C) of the body (1A) and a second sliding-pivotal kinematics (6B) mounts the second vehicle door (3B) in a sliding-pivotal manner at an A-pillar (9A) of the body (1A).

6. Motor vehicle (1) according to any of claims 1 to 5,
**characterized in that**
the locking element (14) on the door side is designed to be introduced into the receiving element (12) on the body side by means of a pivoting movement of the corresponding vehicle door (3), and to be locked in a form-fitting manner in the receiving element (12) on the body side by means of a locking sliding movement of the corresponding vehicle door (3).

7. Motor vehicle (1) according to any of claims 1 to 6,
**characterized in that**
the receiving element (12) on the body side is designed as a keyhole bore (12A) or as a slide guide (12B).

## Revendications

1. Véhicule (1) avec une carrosserie (1A) et au moins deux portes de véhicule (3) agencées l'une derrière l'autre dans le sens longitudinal du véhicule (x) qui sont mobiles respectivement entre une position fermée et une position ouverte et couplées de manière mobile en coulissement et pivotement avec la carrosserie (1A), et au moins un dispositif de verrouillage (10) passif, dans lequel au moins une des portes de véhicule (3) est formée afin de former dans la position fermée une colonne de véhicule (9) de la carrosserie (1A), dans lequel l'au moins un dispositif de verrouillage (10) passif est réalisé afin de relier par complémentarité de formes la colonne de véhicule intégrée (9) de la porte de véhicule (3) correspondante dans la position fermée à la carrosserie (1A), dans lequel l'au moins un dispositif de verrouillage (10) passif comprend un élément de réception (12) côté carrosserie qui comprend une ouverture de réception (12.1) et une ouverture de verrouillage (12.2), et un élément de verrouillage (14) côté porte qui est réalisé comme boulon de verrouillage (14A) cylindrique ou en forme de champignon ou en queue d'aronde,
**caractérisé en ce que**
l'ouverture de réception (12.1) et l'ouverture de verrouillage (12.2) de l'élément de réception (12) côté carrosserie sont adaptées à la forme du boulon de verrouillage (14A) de telle sorte que le boulon de verrouillage (14A) soit encliqueté dans la position fermée comme une baïonnette avec l'élément de réception (12) côté carrosserie.

2. Véhicule (1) selon la revendication 1,
**caractérisé en ce que**
l'au moins un dispositif de verrouillage (10) passif est réalisé afin de relier par complémentarité de formes la colonne de véhicule (9) intégrée dans la position fermée à un composant de structure (2, 8) de la carrosserie (1A).

3. Véhicule (1) selon la revendication 2,
**caractérisé en ce que**
un premier dispositif de verrouillage (10) passif est réalisé afin de relier par complémentarité de formes la colonne de véhicule (9) intégrée dans la position fermée à un premier composant de structure (2) réalisé comme cadre de toit et un second dispositif de verrouillage (10) passif est réalisé afin de relier par complémentarité de formes la colonne de véhicule (9) intégrée dans la position fermée à un second composant de structure (2) réalisé comme seuil (8A).

4. Véhicule (1) selon l'une quelconque des revendications 1 à 3,
**caractérisé en ce que**
au moins un premier élément de renforcement (5A) au niveau d'une section de cadre (4.1) verticale d'une première porte de véhicule (3A) et/ou au moins un second élément de renforcement (5B) au niveau d'une section de cadre (4.2) verticale d'une seconde porte de véhicule (3B) forment la colonne de véhicule (9) intégrée.

5. Véhicule (1) selon la revendication 4,
**caractérisé en ce que**
la première porte de véhicule (3A) est agencée dans le sens de la marche derrière la seconde porte de véhicule (3B), dans lequel une première cinématique de coulissement et pivotement (6A) loge la première porte de véhicule (3A) de manière mobile en coulissement et pivotement au niveau d'une colonne C (9C) de la carrosserie (1A) et une seconde cinématique de coulissement et pivotement (6B) loge la seconde porte de véhicule (3B) de manière mobile en coulissement et pivotement au niveau d'une colonne A (9A) de la carrosserie (1A).

6. Véhicule (1) selon l'une quelconque des revendications 1 à 5,
**caractérisé en ce que**
l'élément de verrouillage (14) côté porte est réalisé afin d'être introduit dans l'élément de réception (12) côté carrosserie par un mouvement de pivotement de la porte de véhicule (3) correspondante et verrouillé par complémentarité de formes dans l'élément de réception (12) côté carrosserie par un mouvement de coulissement verrouillant de la porte de véhicule (3) correspondante.

7. Véhicule (1) selon l'une quelconque des revendications 1 à 6,
**caractérisé en ce que**
l'élément de réception (12) côté carrosserie est réalisé comme perçage de trou de serrure (12A) ou comme guidage à coulisse (12B).
